# EUROPEAN PATENT SPECIFICATION

(11) **EP 2 667 288 B1**
(45) Date of publication and mention of the grant of the patent: **10.10.2018**
(21) Application number: 12169649.6
(22) Date of filing: 25.05.2012
(51) Int. Cl.: G06F 3/0488

(54) **METHOD AND APPARATUS FOR DETECTING A GESTURE**
Verfahren und Vorrichtung zur Erkennung einer Geste
Procédé et appareil pour la détection d'un geste

(43) Date of publication of application: 27.11.2013
(73) Proprietor: BlackBerry Limited, Waterloo, ON N2K 0A7 (CA)
(72) Inventor: Rydenhag, Daniel Tobias, Gothenburg, 413 04 (SE); Johansson, Per Åke Daniel, Malmö 211 40 (SE); Andersson Reimer, Nils Roger, Malmö 211 40 (SE)
(74) Representative: Gill Jennings & Every LLP

(56) References cited:
- EP-A1- 2 214 118
- EP-A1- 2 381 384
- EP-A1- 2 386 976
- US-A1- 2009 006 991
- US-A1- 2010 257 490

## Description

### FIELD OF THE TECHNOLOGY

The present disclosure relates to electronic devices, including but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified based on the functions and operations being performed.

US2009/0006991 A1 describes a device in which, when the device is in an active state, a user can select and move an icon to a locking region of a display of the device to place the device in a locked state.

EP 2 386 976 describes a device in which one or more functions of the device can be reactivated/unlocked by selecting and moving an icon beyond a first boundary, reactivating all functions by dropping the icon on an empty area of the screen beyond this boundary or reactivating only a specific function by dropping the icon on the corresponding functional icon.

According to the present disclosure there is provided a method comprising: receiving a swipe gesture from an initial touch location on a touch-sensitive display (118) of an electronic device (100); determining touch attributes for the swipe gesture, the touch attributes comprising a touch location of the swipe gesture; performing a first lock function when the swipe gesture progresses to a first touch location on the touch-sensitive display that is beyond a first threshold from the initial touch location; performing a second lock function when the swipe gesture progresses to a second touch location on the touch-sensitive display that is beyond a second threshold from the initial touch location.

An electronic device configured to perform the method of the present disclosure is further provided. A computer-readable storage medium containing computer-readable code executable by a processor of a portable electronic device to perform the method of the disclosure is further provided.

### BRIEF DESCRIPTION OF DRAWINGS

FIG. 1 is a block diagram of a portable electronic device in accordance with the disclosure.
FIG. 2 is a front view of an example of a smartphone in accordance with the disclosure.
FIG. 3 is a front view of an example of a tablet computer in accordance with the disclosure.
FIG. 5 illustrates a further example of touch attributes of a swipe gesture in accordance with the disclosure.
FIG. 6 illustrates a further example of touch attributes of a swipe gesture in accordance with the disclosure.
FIG. 7 is a flowchart illustrating a method of the disclosure.

### DETAILED DESCRIPTION

The following describes an apparatus for and method of locking a device based on input received from a touch-sensitive display.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, monitors, displays, televisions and so forth.

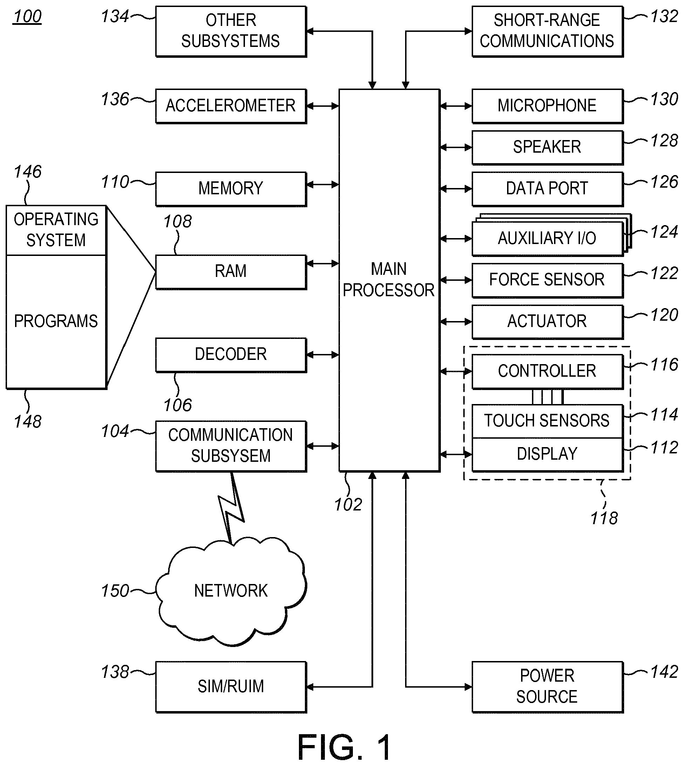

A block diagram of an example of an electronic device 100 is shown in FIG. 1. The electronic device 100 includes multiple components, such as a processor 102 that controls the overall operation of the electronic device 100. Communication functions, including data and voice communications, are performed through a communication subsystem 104. Data received by the electronic device 100 may be decompressed and decrypted by a decoder 106. The communication subsystem 104 receives messages from and sends messages to a wireless network 150. The wireless network 150 may comprise any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module, a Removable User Identity Module (SIM/RUIM) card 138, or alternatively a Universal Integrated Circuit Card (UICC) or an embedded Universal Integrated Circuit Card (eUICC), for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134. Short-range communications subsystem 132 may include any or all of Bluetooth®, Radio-frequency identification (RFID) & near field communications (NFC) technologies. The electronic device may, therefore, in at least some example embodiments, include a near field communications (NFC) subsystem. The NFC subsystem is configured to communicate with other electronic devices and/or tags, using an NFC communications protocol. NFC is a set of short-range wireless technologies which typically require a distance of 4 cm or less for communications. The NFC subsystem may include an NFC chip and an NFC antenna. In at least some example embodiments, the short-range communication subsystem may be a wireless bus protocol compliant communication mechanism such as a Bluetooth® communication module or a Wi-Fi module to provide for communication with similarly-enabled systems and devices. Any one, any combination, or all of these wireless communications technologies may be included in communications sub-system 104, or short-range communications subsystem 132.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may comprise any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A touch may be detected from any suitable input member, such as a finger, thumb, appendage, or other objects, for example, a stylus (active or passive), pen, or other pointer, based on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

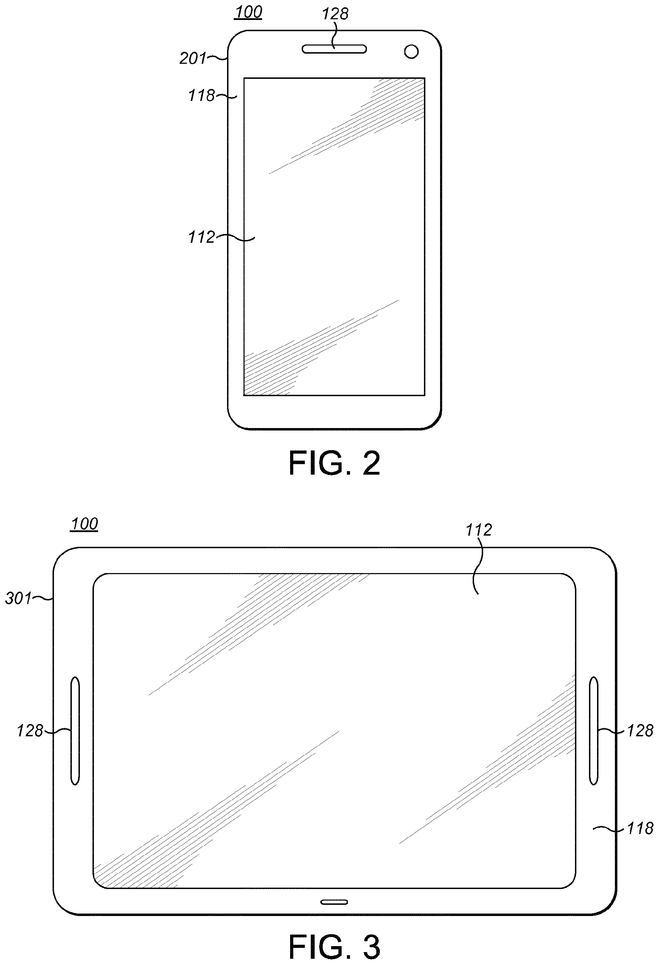

A front view of an example electronic device 100 that is a portable electronic device 201 is illustrated in FIG. 2. A front view of an example electronic device 100 that is a tablet computer 301 is illustrated in FIG. 3.

Touch sensors 114 detect touch input, thus providing the device 100 with an interface to identify gestures based on detected touch locations, series of consecutive touch locations and swipe gestures having certain attributes as described above. The resolution of the touch sensors 114 in electronic devices 100 may be an imprecise indication of the actual location of the touch. The touch location has an associated amount of uncertainty, for example approximately 1 mm to approximately 9 mm based on the spacing of touch sensors 114 and other factors.

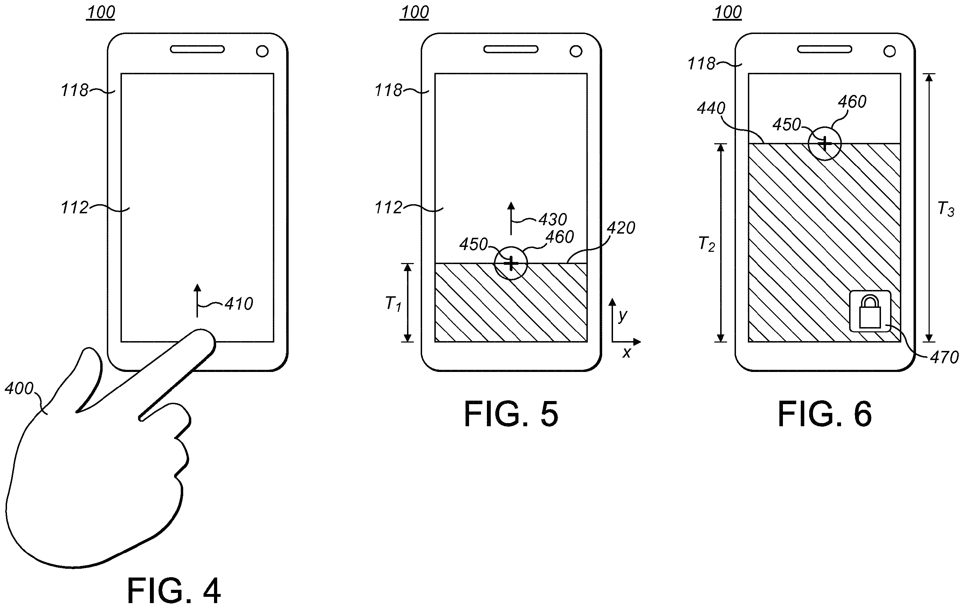

FIG. 4 shows a device 100 to which a gesture is applied by a user 400. An example of a method according to the invention will now be described in relation to Figures 4 to 6. Figure 4 shows a user 400 applying a swipe gesture from an initial touch location. In the illustrated case, the initial touch location is at a perimeter of the touch sensitive display 118. Touch sensitive display 118 may comprise a display 112 and the touch sensitive area 118 may further extend outside of the display 112. Further, the touch sensitive area may be provided on a separate part of device 100 adjacent the display 112. For the purposes of this disclosure, a touch sensitive display 118 includes any touch sensitive area substantially adjacent display 112. On detection of a gesture beginning at an initial touch location, device 100 determines touch attributes of the gesture. These touch attributes can include the initial touch location, along with any other touch attributes discussed above. In the illustrated example, device 100 compares touch attributes of the detected gesture with touch attributes of a stored gesture. The stored gesture may be associated with a lock function of the device 100. The stored touch attributes may include an initial touch location on the touch sensitive display 118. The stored initial touch location may be defined at any point on touch sensitive display 118 of device 100. In one embodiment, the stored initial touch location may be defined as a touch location at, or adjacent to, a perimeter of the touch sensitive display, as illustrated in Figure 4. The touch attributes for the stored gesture may include a second touch location. The second touch location may be defined as a point at a predefined distance from the initial touch location. The predefined distance may be a distance along a certain predefined axis of the display, or may be a predefined distance having a predefined magnitude in any direction on the display. Further, as in the example of Figure 4, the gesture may begin at the initial touch location of the gesture made by the user 400 and progress away from the initial touch location, for example, in a direction of arrow 410. A threshold value of any other suitable touch attribute may alternatively or additionally be used to define the stored gesture. Although in the example described, the swipe gesture is illustrated as having a generally upward direction beginning at an example initial location at or adjacent to the lower perimeter of the device, other directions and other initial locations may be used.

Figure 5 illustrates an example where the gesture includes a swipe from the touch location of Figure 4 to that illustrated by touch location 450 and/or touch area 460. Touch attributes of the gesture may therefore be the initial location shown in Figure 4 and the further touch location 450 illustrated in Figure 5.

FIG. 5 shows a touch location 450 and a corresponding touch area 460. A touch area 460 may compensate for inherent imprecision of determination of a touch location 450.

The touch area 460 may be derived from touch data received from the touch sensors 114 for a detected touch. A touch area 460 may alternatively be a virtual area around the touch location 450, such as the touch area 460.

The size of the virtual touch area 460 may be based on known characteristics, e.g., uncertainties and inaccuracies, of the touch sensors 114. For example, when the resolution for a touch location 450 is 6 mm, the device 100 may generate a 6 mm radius virtual touch area 460 around a touch location to compensate.

Although a circle is utilized for the touch area 460 in the examples herein, other shapes may be utilized. For example, a custom shape that more accurately represents the contact shape of a finger or stylus touching a touch-sensitive display may be utilized. Other input data may determine the shape or size of the touch area 460. For example, the shape of the touch area 460 may be angled based on orientation information received from the accelerometer 136 because the orientation of the device 100 may affect the angle of contact with the touch-sensitive display 118.

For example, in FIG. 4, a touch location 450 is detected and an associated circular touch area 460 is generated. When the touch location 450 changes to another location, information may be provided as to the angle of the touch input. Adjusting for the angle may reduce uncertainty of touch location perpendicular to direction of change of location of the touch. The touch area may optionally be updated to reflect the direction of change.

An attribute of the stored gesture may be a threshold value T₁. In the illustrated example, T₁ is defined as a threshold value in the direction of a Y-axis of display 100 and the threshold is therefore illustrated as a straight line 420 across the touch sensitive display 118 of device 100. Therefore, if the gesture includes a second touch location beyond threshold T₁, then a process in the device may compare these touch attributes and decide that the touch attributes correspond to a stored swipe gesture. This swipe gesture may be associated with a lock function of the device 100. Therefore, a swipe gesture from an initial touch location illustrated in Figure 4, to a further touch location, beyond a threshold value T₁ from the initial touch location, can activate a lock function of the device 100.

It may be desirable to allow a user to activate a plurality of different lock functions of device 100, depending upon touch attributes relating to a distance between an initial touch location of the gesture and a further touch location of the gesture. In this way, device 100 may select one of a plurality of lock functions depending upon the distance of a touch location of the gesture from the initial touch location of the gesture. In this way, device 100 may activate a first lock function after the gesture passes threshold T₁. However, the user may continue the gesture beyond threshold T₁ in the direction of arrow 430 and a further lock function may be activated when a touch location of the gesture exceeds a second threshold, such as T₂ shown in Figure 6.

Figure 6 illustrates further threshold T₂, which may be a further distance from the initial touch location illustrated in Figure 4. Here, the threshold T₂ is illustrated by a straight line 440 across touch sensitive display 118. Threshold T₂ may however be defined as a magnitude of a distance between an initial touch location and a further touch location of the gesture, by a total distance along a path followed by the gesture or by a threshold value of any other suitable touch attribute. In general, the further threshold T₂ may be any touch attribute having a magnitude greater than threshold T₁. Upon detecting that a touch attribute has exceeded threshold T₂, the device may activate a second lock function, different from the first lock function activated after threshold T₁ is passed.

Device 100 may activate the relevant lock function only when a release of the gesture is detected beyond threshold T₁ or T₂. In this way, if a user continues the gesture in a reverse direction such that the threshold T₁ is no longer exceeded before releasing the gesture, then the device may not activate the lock function associated with threshold T₁. The same may apply to the threshold T₂.

Upon passing either of thresholds T₁ or T₂, the device may further set display 112 to display a lock function indicator 470. Lock function indicator 470 may further define a lock function touch area. Detection of a touch at the lock function touch area, defined in relation to lock function indicator 470, may activate a further lock function of the device 100. The lock function indicator 470 may only be displayed for a predetermined period and then be removed from the display, along with the lock function touch area. The lock function indicator may change appearance, or disappear, on detection of a touch at the lock function indicator.

A further threshold T₃ may be defined. T₃ may be defined as a touch location at a perimeter substantially opposite the perimeter at which an initial touch location is defined. Therefore, a gesture beginning at a first perimeter of the display 112 and ending at a second, optionally opposite, perimeter of the display 112 or 118 may cause the device 100 to initiate a locking function of the device. Further thresholds Tₙ may be implemented to define further lock functions of the device at further thresholds Tₙ of touch attributes of the device. As such, any number of thresholds Tₙ may be defined as corresponding to any number of different locking functions of device 100.

Further visual indications of the device having detected the gesture as having touch attributes associated with a lock function may be implemented to give an indication to the user that a lock function may be activated upon release of the gesture. One example can be described in relation to the areas each side of line 420 in Figure 5, or line 440 in Figure 6. The device 100 may adjust the display 112 as the progression of the touch location 450 of the gesture is updated. The display may be updated to adjust display parameters of the part of the display between the initial touch location and the current touch location, so that the appearance of the area between the initial touch location and the current touch location is different to the area beyond the current touch location. As an example, the screen may be darkened in the area between the initial touch location and the current touch location, so that as the gesture progresses along display 112 in a y-direction, the display is progressively darkened. This can provide a clear indication to the user that the device considers a gesture associated with a lock function to have been detected. Such progressive adjustment of display properties can also help to indicate to the user when any of thresholds T₁, T₂ or T₃ is considered reached by the gesture as detected by device 100.

It can therefore be seen that touch attributes of a swipe gesture applied to a touch sensitive display of a device 100 can be associated with multiple lock functions and, by use of a single gesture, a user can initiate one or more lock functions in device 100 without a need for multiple touches or multiple gestures. Further touches may be provided to activate further locking function options if desired.

Locking functions may include any of the following: activating a screen lock, activating a device lock, and activating a lock of certain functionality of the device. A screen lock may comprise setting a mode of the device wherein at least some touch input from the touch sensitive display is ignored. All touch input may be ignored when a screen lock is activated, unless touch input is required to unlock the screen, in which case only certain gestures may be used to unlock the screen. This advantageously avoids inadvertent "pocket dialing" wherein an unintended phone call is made or other touch events inadvertently occur while the device is in a user's pocket or purse, etc. This advantageously further avoids the potential costs associated with an accidental phone call or other accidental action. This advantageously further avoids other undesirable consequences, such as embarrassment or breach of confidentiality resulting from a conversation that is inadvertently overheard or a message that is inadvertently forwarded as a result of accidental touch inputs. In embodiments in which the device comprises a keyboard and/or other keys or buttons, inputs such as key or button presses may be ineffective while screen lock (which may also be referred to as a keyboard lock) is active. This advantageously avoids unintentional key presses while the device is in a user's pocket or purse, etc. Certain keys or buttons may be allowed to function while the screen lock (or keyboard lock) is active, such as a key or button used to make an emergency phone call, or a key or button used to power off the device, etc. The display may further be darkened, dimmed or switched off when the screen lock is active. Darkening, dimming or switching off the display advantageously reduces power consumption and extends battery life. In some embodiments, the device may display a screensaver or status information such as the date and time, etc. while screen lock is active. The device may also enter a standby mode or low-power mode when the screen lock is activated.

Locking functions may further include activating a device lock. A device lock may do any of the following: lock one or more services of the device, prevent access to the device over certain RF or wired links such as Bluetooth or USB access, and add security measures, such as requiring a password, PIN-code, biometric data, or other authentication token for accessing the device. If a password or other token is required to unlock a locked device, the locking function may be referred to as a password lock. A device lock may be considered an extension of the screen lock function, adding additional security beyond the screen lock and so to allow the user to lock the device as an extension of a gesture used to lock the screen provides a more convenient user interface. In one example of a device lock, which may sometimes be referred to as a partial device lock, certain applications or services or other resources of the device are inaccessible, while others are accessible. In one example of a partial device lock which may sometimes be referred to as a perimeter lock, wherein a perimeter generally refers to a logical group of resources that share a common management scheme governing their use, one or more perimeters of the device is locked while one or more perimeters of the device is unlocked. A device may comprise multiple perimeters, such as a work or enterprise perimeter, and a personal or recreational perimeter. A work perimeter may comprise work-related data and applications (such as customer relationship software, enterprise collaboration software, etc.) and other resources classified as work-related, and a personal perimeter may comprise personal-related data and applications (such as social networking applications, games, etc.) and other resources classified as personal. The perimeter lock may provide for the user to lock certain functions or resources of the device, such as those associated with a work or enterprise perimeter, with a gesture having a first set of touch attributes, and lock certain other functions or resources of the device, such as those associated with a personal or recreational perimeter of the device, if the gesture has a second set of touch attributes. The ability to provide such multiple locking functions can be desirable in particular in light of the increasing use of personal devices for work functions and there is therefore an increasing need for the ability to lock certain functions of the device more quickly, more easily, or more regularly than others.

The lock function may only be recognised by the device when the home screen is displayed. The detection of the gestures described herein for locking the device may therefore be disabled when the device is not showing the home screen. This can be beneficial, since a user often returns to the home screen before locking the device. A similar gesture may be used to return to the home screen as for locking the device, which provides a simple combination of similar gestures to both return to the home screen and to lock the device. Therefore, the same detection steps described herein in relation to a lock function may be used to activate a function which returns the user to the home screen. The method steps may further be applied to other non-locking functions of the device if desired.

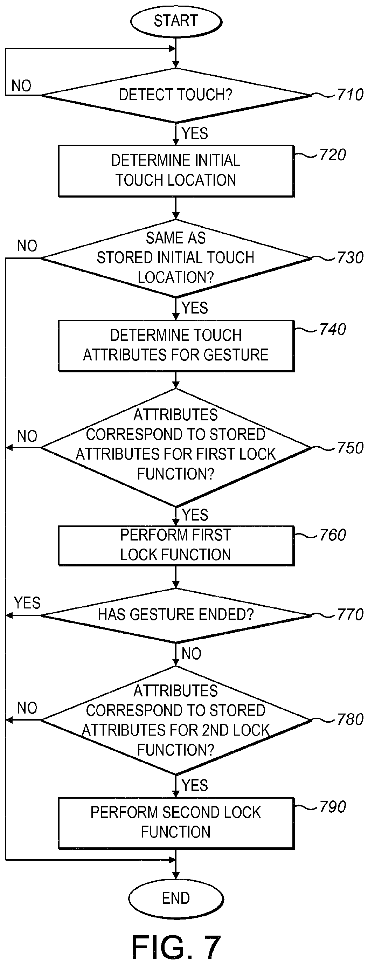

A flowchart illustrating a method of detecting gestures associated with a lock function or functions is shown in FIG. 7. The method may be carried out by software executed, for example, by the processor 102. Coding of software for carrying out such a method is within the knowledge of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, which may be a non-transitory or tangible storage medium.

When a touch is detected 710 by the touch-sensitive display 118, touch data, including a touch location, is provided to the processor 102. For example, the touch location may be an x, y coordinate and may include additional touch information such as a time stamp, pressure information or other attributes obtainable from touch sensors 114. An initial touch location of a swipe gesture is determined 720 based on the received touch location. The touch location may be determined based on the raw touch input data or by establishing a virtual touch location, or a virtual touch area, based at least on the touch input data.

The initial touch location for the swipe gesture is compared 730 with a stored initial touch location for a locking function. Here, if the initial touch location does not correspond to the stored initial touch location for a locking function, then the process ends. If the detected initial touch location is the same as the stored initial touch location, then touch attributes are determined 740 for the gesture. The touch attributes determined at 740 are then compared 750 with stored touch attributes for a gesture corresponding to a lock function. This may be done after a delay, and/or repeated until either a gesture corresponding to a lock function is detected, or until a release of the gesture is detected. If the touch attributes for the gesture do not correspond to the stored touch attributes for a gesture associated with a lock function, then the process may end. However, if the touch attributes determined for the gesture do correspond to a stored gesture for the lock function then the lock function is performed 760. It is then determined 770 whether the gesture has ended if this has not already been established. The gesture usually finishes with a release of the touch and so if the touch has been released, then the gesture is considered to have ended and the process ends. However, if the gesture has not ended and a touch is still detected, then the method may optionally compare 780 the gesture with a second set of touch attributes stored for a second gesture associated with a second lock function at 780. If the detected attributes correspond to stored attributes for a gesture associated with a second lock function then the second lock function will be performed 790. If the detected attributes do not correspond to stored attributes for a gesture associated with the second lock function, then the process ends without performing a second lock function. Further instances of comparison step 780 and locking function performing step 790 may be included for further locking functions if desired. As set out above, it may be desirable to repeat steps 740 and 750 until either a release is detected or touch attributes corresponding to a lock function are detected, so that attributes of the gesture may be compared at multiple steps before ending the process. This may allow a sufficient number of iterations for the user to have described the gesture which is associated with a lock function before the process is ended. Alternatively or additionally, a delay may be provided between steps 730 and 740 so that a user has time to describe a suitable gesture before comparison step 750 is executed.

The implementation described is an illustrative example of one of many possible implementations envisioned by this disclosure. Other implementations may choose a different ordering, different weightings, and different combinations. Modifications to the examples may be made utilizing techniques to improve the efficiency and reduce computation or provide other advantages.

The present disclosure may be embodied in other specific forms without departing from its spirit or essential characteristics. The described examples are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
receiving a swipe gesture from an initial touch location on a touch-sensitive display (118) of an electronic device (100);
determining (740) touch attributes for the swipe gesture, the touch attributes comprising a touch location;
performing (760) a first lock function when the swipe gesture progresses to a first touch location on the touch-sensitive display that is beyond a first threshold (420) from the initial touch location; and
performing (790) a second lock function when the swipe gesture progresses to a second touch location on the touch-sensitive display that is beyond a second threshold (440) from the initial touch location, the second threshold having a magnitude greater than the first threshold.

2. The method of claim 1, wherein the initial touch location is substantially at or substantially adjacent to a perimeter of the touch-sensitive display (118).

3. The method of claim 1 or 2, wherein the first lock function and the second lock function are associated with respective stored touch attributes each comprising a stored initial touch location, and wherein the initial touch location of the swipe gesture corresponds to the initial touch location stored for the first lock function and to the initial touch location stored for the second lock function.

4. The method of claim 3, further comprising:
comparing (750) the determined touch attributes to the touch attributes stored for the first lock function; and
comparing (780) the determined touch attributes to the touch attributes stored for the second lock function.

5. The method of any one of claims 1 to 4, wherein at least one of the first and second thresholds is defined by one of a distance along an axis of the touch-sensitive display from the initial touch location and a distance along a path followed by the swipe gesture.

6. The method of any one of the preceding claims, further comprising visually altering a graphical output of the touch-sensitive display as the swipe gesture proceeds, to provide a visual indication of the impending activation of the lock function.

7. The method of any one of the preceding claims, wherein detecting a release of the swipe gesture activates a lock function.

8. The method of any one of the preceding claims, wherein the second lock function adds additional security to the first lock function.

9. The method of any one of the preceding claims, wherein the first threshold defines a swipe having a first length, and the second threshold defines a swipe having a second length longer than the first lengh.

10. The method of any one of the preceding claims, wherein the first lock function comprises a screen lock and wherein the second lock function comprises a device lock.

11. The method of any one of the preceding claims, wherein at least one of the first and second lock functions comprises at least one of: locking a service, locking an application, a device lock, a partial device lock, or a perimeter lock.

12. The method of any one of the preceding claims, further comprising:
presenting a lock function indicator (470) on the touch sensitive display (118) when the swipe gesture progresses to at least one of the first touch location and the second touch location; and
optionally activating a lock function upon receiving a touch input at the lock function indicator.

13. An electronic device (100) configured to perform the method of any preceding claim.

14. A computer-readable storage medium (110) having computer-readable code executable by at least one processor (102) of a portable electronic device (100) to perform the method of any one of claims 1 to 12.

## Patentansprüche

1. Verfahren, umfassend:
Empfangen einer Wischgeste von einer anfänglichen Berührungsposition auf einem berührungsempfindlichen Display (118) einer elektronischen Vorrichtung (100);
Bestimmen (740) von Berührungsattributen für die Wischgeste, wobei die Berührungsattribute eine Berührungsposition umfassen;
Durchführen (760) einer ersten Sperrfunktion, wenn sich die Wischgeste zu einer ersten Berührungsposition auf dem berührungsempfindlichen Display fortsetzt, die jenseits eines ersten Schwellenwerts (420) von der anfänglichen Berührungsposition entfernt ist; und
Durchführen (790) einer zweiten Sperrfunktion, wenn sich die Wischgeste zu einer zweiten Berührungsposition auf dem berührungsempfindlichen Display fortsetzt, die jenseits eines zweiten Schwellenwerts (440) von der anfänglichen Berührungsposition entfernt ist, wobei der zweite Schwellenwert einen höheren Wert aufweist als der erste Schwellenwert.

2. Verfahren nach Anspruch 1, wobei die anfängliche Berührungsposition im Wesentlichen an einem oder im Wesentlichen angrenzend an einen Umfang des berührungsempfindlichen Displays (118) liegt.

3. Verfahren nach Anspruch 1 oder 2, wobei die erste Sperrfunktion und die zweite Sperrfunktion entsprechenden gespeicherten Berührungsattributen zugeordnet sind, die jeweils eine gespeicherte anfängliche Berührungsposition umfassen, und wobei die anfängliche Berührungsposition der Wischgeste der anfänglichen Berührungsposition, die für die erste Sperrfunktion gespeichert ist, und der anfänglichen Berührungsposition, die für die zweite Sperrfunktion gespeichert ist, entspricht.

4. Verfahren nach Anspruch 3, ferner umfassend:
Vergleichen (750) der bestimmten Berührungsattribute mit den Berührungsattributen, die für die erste Sperrfunktion gespeichert sind; und
Vergleichen (780) der bestimmten Berührungsattribute mit den Berührungsattributen, die für die zweite Sperrfunktion gespeichert sind.

5. Verfahren nach einem der Ansprüche 1 bis 4, wobei mindestens einer des ersten und des zweiten Schwellenwerts durch eine von einer Entfernung entlang einer Achse des berührungsempfindlichen Displays von der anfänglichen Berührungsposition und einer Entfernung entlang eines Wegs, dem die Wischgeste folgt, definiert ist.

6. Verfahren nach einem der vorhergehenden Ansprüche, ferner das visuelle Verändern einer grafischen Ausgabe des berührungsempfindlichen Displays umfassend, während sich die Wischgeste fortsetzt, um eine visuelle Anzeige der bevorstehenden Aktivierung der Sperrfunktion bereitzustellen.

7. Verfahren nach einem der vorhergehenden Ansprüche, wobei das Erkennen einer Freigabe der Wischgeste eine Sperrfunktion aktiviert.

8. Verfahren nach einem der vorhergehenden Ansprüche, wobei die zweite Sperrfunktion zusätzliche Sicherheit zur ersten Sperrfunktion hinzufügt.

9. Verfahren nach einem der vorhergehenden Ansprüche, wobei der erste Schwellenwert ein Wischen mit einer ersten Länge definiert und der zweite Schwellenwert ein Wischen mit einer zweiten Länge definiert, die länger als die erste Länge ist.

10. Verfahren nach einem der vorhergehenden Ansprüche, wobei die erste Sperrfunktion eine Bildschirmsperre umfasst und wobei die zweite Sperrfunktion eine Vorrichtungssperre umfasst.

11. Verfahren nach einem der vorhergehenden Ansprüche, wobei mindestens eine der ersten und der zweiten Sperrfunktion mindestens eines der Folgenden umfasst: Sperren eines Dienstes, Sperren einer Anwendung, eine Vorrichtungssperre, eine teilweise Vorrichtungssperre oder eine Umfangssperre.

12. Verfahren nach einem der vorhergehenden Ansprüche, ferner umfassend:
Präsentieren einer Sperrfunktionsanzeige (470) auf dem berührungsempfindlichen Display (118), wenn sich die Wischgeste zu mindestens einer der ersten Berührungsposition und der zweiten Berührungsposition fortsetzt; und
optional Aktivieren einer Sperrfunktion nach Empfangen einer Berührungseingabe an der Sperrfunktionsanzeige.

13. Elektronische Vorrichtung (100), die dafür konfiguriert ist, das Verfahren nach einem der vorhergehenden Ansprüche durchzuführen.

14. Computer-lesbares Speichermedium (110) mit computer-ausführbarem Code, der von mindestens einem Prozessor (102) einer tragbaren Vorrichtung (100) ausführbar ist, um das Verfahren nach einem der Ansprüche 1 bis 12 durchzuführen.

## Revendications

1. Procédé comprenant les étapes consistant à :
recevoir un geste de balayage depuis un emplacement de toucher initial sur un affichage à écran tactile (118) d'un dispositif électronique (100) ;
déterminer (740) des attributs de toucher pour le geste de balayage, les attributs de toucher comprenant un emplacement de toucher ;
réaliser (760) une première fonction de verrouillage lorsque le geste de balayage progresse jusqu'à un premier emplacement de toucher sur l'affichage à écran tactile qui se situe au-delà d'un premier seuil (420) depuis l'emplacement de toucher initial ; et
réaliser (790) une seconde fonction de verrouillage lorsque le geste de balayage progresse jusqu'à un second emplacement de toucher sur l'affichage à écran tactile qui se situe au-delà d'un second seuil (440) depuis l'emplacement de toucher initial, le second seuil ayant une amplitude supérieure à celle du premier seuil.

2. Procédé selon la revendication 1, dans lequel l'emplacement de toucher initial est situé sensiblement au niveau de, ou sensiblement adjacent à, un périmètre de l'affichage à écran tactile (118).

3. Procédé selon la revendication 1 ou 2, dans lequel la première fonction de verrouillage et la seconde fonction de verrouillage sont associées à des attributs de toucher stockés respectifs comprenant chacun un emplacement de toucher initial stocké, et dans lequel l'emplacement de toucher initial du geste de balayage correspond à l'emplacement de toucher initial stocké pour la première fonction de verrouillage et à l'emplacement de toucher initial stocké pour la seconde fonction de verrouillage.

4. Procédé selon la revendication 3, comprenant, en outre, les étapes consistant à :
comparer (750) les attributs de toucher déterminés avec les attributs de toucher stockés pour la première fonction de verrouillage ; et
comparer (780) les attributs de toucher déterminés avec les attributs de toucher stockés pour la seconde fonction de verrouillage.

5. Procédé selon l'une quelconque des revendications 1 à 4, dans lequel au moins l'un des premier et second seuils est défini soit par une distance le long d'un axe de l'affichage à écran tactile depuis l'emplacement de toucher initial, soit par une distance le long d'une trajectoire suivie par le geste de balayage.

6. Procédé selon l'une quelconque des revendications précédentes, comprenant, en outre, la modification visuelle d'une sortie graphique de l'affichage à écran tactile tandis que le geste de balayage se fait, pour fournir une indication visuelle de l'activation prochaine de la fonction de verrouillage.

7. Procédé selon l'une quelconque des revendications précédentes, dans lequel la détection d'une libération du geste de balayage active une fonction de verrouillage.

8. Procédé selon l'une quelconque des revendications précédentes, dans lequel la seconde fonction de verrouillage ajoute une sécurité supplémentaire à la première fonction de verrouillage.

9. Procédé selon l'une quelconque des revendications précédentes, dans lequel le premier seuil définit un balayage ayant une première longueur, et le second seuil définit un balayage ayant une seconde longueur supérieure à la première longueur.

10. Procédé selon l'une quelconque des revendications précédentes, dans lequel la première fonction de verrouillage comprend un verrouillage d'écran et dans lequel la seconde fonction de verrouillage comprend un verrouillage de dispositif.

11. Procédé selon l'une quelconque des revendications précédentes, dans lequel au moins l'une des première et seconde fonctions de verrouillage comprend au moins un des éléments suivants : verrouillage d'un service, verrouillage d'une application, verrouillage de dispositif, verrouillage de dispositif partiel, ou verrouillage de périmètre.

12. Procédé selon l'une quelconque des revendications précédentes, comprenant, en outre, les étapes consistant à :
présenter un indicateur de fonction de verrouillage (470) sur l'affichage à écran tactile (118) lorsque le geste de balayage progresse jusqu'au moins l'un des premier et second emplacements de toucher ; et
activer, en option, une fonction de verrouillage lors de la réception d'une entrée de toucher au niveau de l'indicateur de fonction de verrouillage.

13. Dispositif électronique (100) configuré pour mettre en oeuvre le procédé selon l'une quelconque des revendications précédentes.

14. Support de stockage (110) pouvant être lu par ordinateur comportant un code pouvant être lu par ordinateur, exécutable par au moins un processeur (102) d'un dispositif électronique portable (100) afin de mettre en oeuvre le procédé selon l'une quelconque des revendications 1 à 12.
